# EUROPEAN PATENT SPECIFICATION

(11) **EP 4 628 754 B1**
(45) Date of publication and mention of the grant of the patent: **22.07.2026**
(21) Application number: 24217040.5
(22) Date of filing: 03.12.2024
(51) Int. Cl.: F16H 9/18, F16H 55/56, F16H 63/06

(54) **CONTINUOUSLY VARIABLE TRANSMISSION AND STRADDLED VEHICLE INCLUDING CONTINUOUSLY VARIABLE TRANSMISSION**
STUFENLOSES GETRIEBE UND GRÄTSCHSITZFAHRZEUG MIT STUFENLOSEM GETRIEBE
TRANSMISSION À VARIATION CONTINUE ET VÉHICULE À ENFOURCHER COMPRENANT UNE TRANSMISSION À VARIATION CONTINUE

(30) Priority: 04.04.2024 JP 2024061072
(43) Date of publication of application: 08.10.2025
(73) Proprietor: Yamaha Hatsudoki Kabushiki Kaisha, Iwata-shi, Shizuoka 438-8501 (JP)
(72) Inventor: FUJIKURA, Kyohei, Iwata-shi, 4388501 (JP); TANAKA, Ippei, Iwata-shi, 4388501 (JP)
(74) Representative: Studio Torta S.p.A.

(56) References cited:
- JP-B2- 4 865 616
- US-A1- 2002 142 870
- US-A1- 2011 015 012
- US-A1- 2018 274 944

## Description

### BACKGROUND

### Technical Field

The present invention relates to a continuously variable transmission and a straddled vehicle including a continuously variable transmission.

### Background

The patent literature 1 discloses a continuously variable transmission. The continuously variable transmission includes a primary pulley, a secondary pulley and a belt wound around the primary pulley and the secondary pulley. The primary pulley and/or the secondary pulley include a fixed sheave and a movable sheave.

A plurality of pin members, which are separate members from the movable sheave, is attached to a side surface of the movable sheave. Specifically, a plurality of pin members are attached to the side surface of the movable sheave via cylinders. Each of the plurality of pin members is detected by a rotational speed sensor. The rotation speed sensor detects the rotation of the movable sheave by detecting each of the multiple pin members.

Patent Literature 1; Japanese Laid-open Patent Application No. 2018-087618

In a conventional continuously variable transmission, the plurality of pin members and cylinders are attached to a movable sheave. In other words, it is necessary to configure a detected portion with a plurality of members and to attach the plurality of members to the movable sheave in order to detect the rotation of the movable sheave by the rotation speed sensor. For this reason, in the conventional continuously variable transmissions, a structure of the detected portion and a structure around the detected portion become complicated and an assemblability of the detected portion may reduce. In addition, in the conventional continuously variable transmissions, the sheave, to which the detected portion is attached, may become heavy.
US-A-2002/142870 discloses a continuously variable transmission according to the preamble of claim 1.

### Description of the invention

An object of the present invention is to provide a continuously variable transmission in which a detected portion can be configured with a simple structure and in which an assemblability of the detected portion and a sheave can be improved. Another object of the present invention is to provide a continuously variable transmission which can reduce weight of a sheave.

A continuously variable transmission according to the present invention transmits driving force from an engine to a wheel. The continuously variable transmission includes the features of claim 1.
The primary pulley is connected to the engine. The secondary pulley is connected to the wheel. The belt is wound around the primary pulley and the secondary pulley. The detection portion is configured to detect rotation of at least one of the primary pulley and the secondary pulley.

Each of the primary pulley and the secondary pulley includes a fixed sheave and a movable sheave. The fixed sheave is configured to rotate around a rotational center axis. The movable sheave is disposed so as to face the fixed sheave in an axial direction with respect to the rotational center axis and to move relative to the fixed sheave in the axial direction. At least one of the fixed sheave and the movable sheave includes a sheave body and a detected portion. The detected portion is integrally formed with the sheave body and which is detected by the detection portion.

In the continuously variable transmission, each of the primary pulley and the secondary pulley includes a fixed sheave and a movable sheave. At least one of the fixed sheave and the movable sheave includes the sheave body and the detected portion. The detected portion is integrally formed with the sheave body.

Therefore, in the continuously variable transmission, there is no need to prepare the detected portion as a separate member such as the conventional technology. In other words, in the continuously variable transmission, the detected portion can be configured with a simple structure and an assemblability of the detected portion and the sheave can be improved. In addition, the weight of the sheave can be reduced.

The continuously variable transmission can be configured as follows. The detected portion includes at least one protruding portion which protrudes from an outer surface of the sheave body. With this configuration, the detected portion can be easily provided on the sheave body and the weight of the sheave can be reduced.

The continuously variable transmission can be configured as follows. The sheave body is formed in a circular shape. The at least one protruding portion is integrally formed with an outer peripheral portion of the sheave body. With this configuration, the rotation of the sheave body can be suitably detected.

The continuously variable transmission can be configured as follows. The at least one protruding portion is formed so as to protrude from an outer surface of the sheave body by bending the at least one protruding portion in a state where the at least one protruding portion protrudes from the outer peripheral portion of the sheave body to a radially outer side of the sheave body. With this configuration, the detected portion can be easily formed on the sheave body.

The continuously variable transmission can be configured as follows. The at least one of the fixed sheave and the movable sheave further includes a flange portion which is integrally formed with the sheave body and protrudes from the outer surface of the sheave body. The detected portion includes the at least one protruding portion which is protrudes from the flange portion.

With this configuration, the flange portion projects from the outer surface of the sheave body and the at least one protruding portion projects from the flange portion. Therefore, strength and rigidity between the outer surface of the sheave body and the at least one protruding portion can be improved by the flange portion.

The continuously variable transmission can be configured as follows. The sheave body is formed in a circular shape. The flange portion is integrally formed with the outer peripheral portion of the sheave body and extends in a circumferential direction with respect to the rotational center axis. With this configuration, strength and rigidity between the outer peripheral portion of the sheave body and the at least one protruding portion can be suitably improved by the flange portion.

The continuously variable transmission can be configured as follows. The flange portion and the detected portion are formed so as to protrude from an outer peripheral portion of the sheave body by bending the at least one protruding portion in a state where the at least one protruding portion protrudes from the outer peripheral portion of the sheave body to a radially outer side of the sheave body. With this configuration, the detected portion can be easily formed on the sheave body and the rotation of the sheave body can be suitably detected.

The continuously variable transmission can be configured as follows. The detection portion is disposed outside the sheave body in a radial direction with respect to the rotation center axis. With this configuration, the degree of freedom in the layout of the detection portion can be improved. Therefore, the detection portion can appropriately detects the detected portion.

A straddled vehicle according to one aspect of the present invention includes an engine, a wheel, and a continuously variable transmission. The engine includes a crankshaft. The continuously variable transmission transmits driving force from the engine to the wheel. The continuously variable transmission includes a primary pulley, a secondary pulley, a belt and a detection portion. The primary pulley is connected to the crankshaft. The secondary pulley is connected to the wheel. The belt is wound around the primary pulley and the secondary pulley. The detection portion is configured to detect rotation of at least one of the primary pulley and the secondary pulley.

Each of the primary pulley and the secondary pulley includes a fixed sheave and a movable sheave. The fixed sheave is configured to rotate around a rotational center axis. The movable sheave is disposed so as to face the fixed sheave in an axial direction with respect to the rotational center axis. The movable sheave is disposed so as to move relative to the fixed sheave in the axial direction. At least one of the fixed sheave and the movable sheave includes a sheave body and a detected portion. The detected portion is integrally formed with the sheave body and is detected by the detection portion.

In the straddled vehicle, each of the primary pulley and the secondary pulley in the continuously variable transmission includes the fixed sheave and the movable sheave. The at least one of the fixed sheave and the movable sheave includes the sheave body and the detected portion. The detected portion is integrally formed with the sheave body.

Therefore, in the straddled vehicle, there is no need to prepare the detected portion as a separate member such as the conventional technology. In other words, in the continuously variable transmission, the detected portion can be configured with a simple structure and an assemblability of the detected portion and the sheave can be improved. In addition, weight of the sheave can be reduced.

According to the present invention, in a continuously variable transmission and a straddled vehicle, a detected portion can be configured with a simple structure, an assemblability of the detected portion and a sheave can be improved, and weight of the sheave can be reduced.

### Brief description of the drawings

FIG. 1 is a left side view of a straddled vehicle.
FIG. 2 is a cross-sectional top view of an engine unit.
FIG. 3 is an enlarged view of a primary pulley and a sheave drive mechanism.
FIG. 4 is an enlarged view of the primary pulley and the sheave drive mechanism.
FIG. 5 is an enlarged view of a secondary pulley and a centrifugal clutch.
FIG. 6 is an enlarged view of the secondary pulley and the centrifugal clutch.
FIG. 7 is a top view of the secondary pulley and a rotation detection sensor.
FIG. 8 is a perspective view of a fixed sheave of the secondary pulley.
FIG. 9 is a perspective view of the fixed sheave of the secondary pulley.
FIG. 10A is a side view of the fixed sheave of the secondary pulley before molding.
FIG. 10B is a side view of the fixed sheave of the secondary pulley after molding. Embodiments of the invention

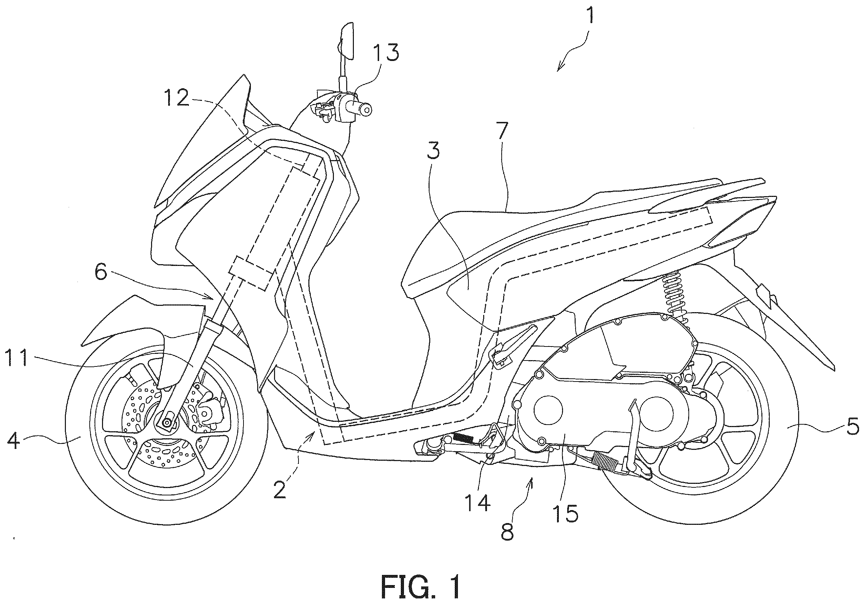

A straddled vehicle according to a preferred embodiment will be explained with reference to drawings. FIG. 1 is a left side view of the straddled vehicle 1 according to the preferred embodiment. The straddled vehicle 1 according to the present embodiment is a scooter. As shown in FIG. 1, the straddled vehicle 1 includes a vehicle body frame 2, a vehicle body cover 3, a front wheel 4, a rear wheel 5 (an example of a wheel), a steering device 6, a seat 7, and an engine unit 8. In this embodiment, each of a front-rear direction and a left-right direction corresponds to a front-rear direction and a left-right direction as seen by a rider seated on the seat 7.

The vehicle body cover 3 covers the vehicle body frame 2. The front wheel 4 is mounted to a front fork 11. The rear wheel 5 is mounted to the engine unit 8. The steering device 6 is supported by the vehicle body frame 2 so as to be rotatable left and right. The steering device 6 includes the front fork 11, a steering shaft 12 and a handle member 13.

The front fork 11 rotatably supports the front wheel 4. The steering shaft 12 is connected to the front fork 11. The steering shaft 12 is supported by the vehicle body frame 2 so as to be rotatable left and right. The handle member 13 is connected to the steering shaft 12. The seat 7 is disposed behind the handle member 13.

The engine unit 8 is disposed below the seat 7. The engine unit 8 is supported by the vehicle body frame 2 so as to be swingable up and down. The rear wheel 5 is rotatably supported by the engine unit 8. The engine unit 8 includes an engine 14 and a continuously variable transmission 15. The continuously variable transmission 15 is disposed on the side of the engine 14. The continuously variable transmission 15 transmits driving force from the engine 14 to the rear wheel 5.

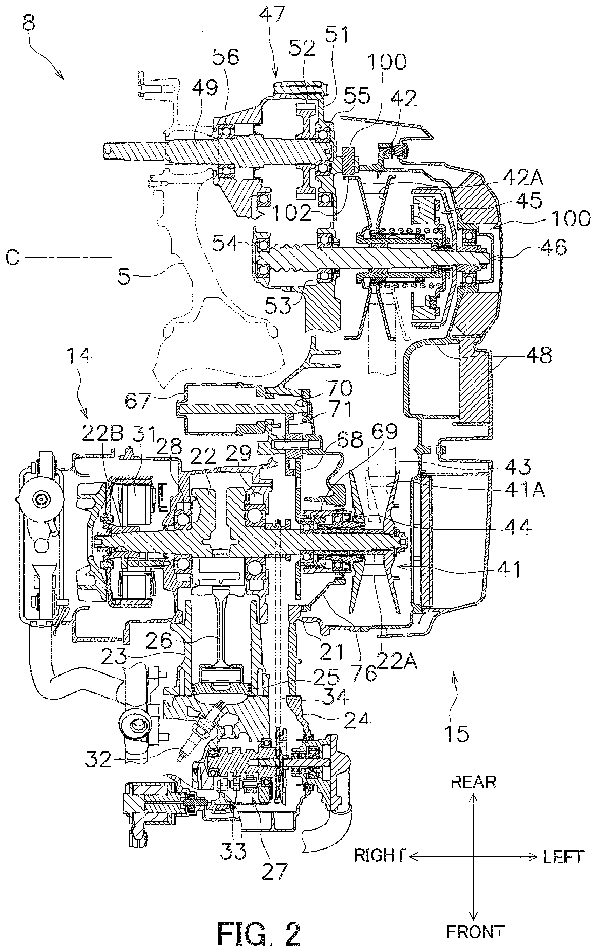

FIG. 2 is a cross-sectional top view of the engine unit 8. As shown in FIG. 2, the engine 14 includes a crankcase 21, a crankshaft 22, a cylinder body 23, a cylinder head 24, a piston 25, a connecting rod 26, and a valve actuating mechanism 27.

The crankshaft 22 is accommodated in the crankcase 21. The crankshaft 22 is rotatably supported by the crankcase 21 via bearings 28, 29. The crankshaft 22 includes a first shaft end 22A and a second shaft end 22B. The continuously variable transmission 15 is connected to the first shaft end 22A. An electric power generator 31 is connected to the second shaft end 22B.

The cylinder body 23 is connected to the crankcase 21. The cylinder head 24 is connected to the cylinder body 23. The connecting rod 26 and the piston 25 are disposed in the cylinder body 23. The piston 25 is connected to the crankshaft 22 via the connecting rod 26. An ignition device 32 is mounted to the cylinder head 24.

The valve actuating mechanism 27 includes a camshaft 33. A cam chain 34 is wound around the camshaft 33 and the crankshaft 22. Rotation of the crankshaft 22 is transmitted to the camshaft 33 via the cam chain 34 and the camshaft 33 rotates. As a result, an intake valves and an exhaust valve (not shown) of the engine 14 are driven by the valve actuating mechanism 27.

The continuously variable transmission 15 shown in FIG. 2 is an electronically controlled transmission. In other words, the continuously variable transmission 15 is electrically controlled to change a gear ratio in accordance with a command signal transmitted from a controller (not shown).

As shown in FIG. 2, the continuously variable transmission 15 includes a primary pulley 41, a secondary pulley 42, a belt 43, a sheave drive mechanism 44, a centrifugal clutch 45, an output shaft 46, a reducer 47 and a transmission case 48. The continuously variable transmission 15 further includes a rotation detection sensor 100 (an example of a detection portion).

The primary pulley 41 is connected to the engine 14. Specifically, the primary pulley 41 is connected to the crankshaft 22. The primary pulley 41 includes a first groove 41A which is formed in a V-shape. The secondary pulley 42 is connected to the rear wheel 5 via an axle 49. Specifically, the secondary pulley 42 is connected to the rear wheel 5 via the output shaft 46, the reducer 47, and the axle 49. The secondary pulley 42 includes a second groove 42A which is formed in a V-shape.

The belt 43 is wound around the primary pulley 41 and the secondary pulley 42. The belt 43 has a trapezoidal cross section which corresponds to the shapes of the first groove 41A and the second groove 42A. The secondary pulley 42 is connected to the output shaft 46 via the centrifugal clutch 45.

In the following description, unless otherwise specified, the axial direction of the output shaft 46 will be referred to as the "an axial direction" and the radial direction of the output shaft 46 will be referred to as the "a radial direction". The direction around the output shaft 46 will be referred to as the "a circumferential direction". The output shaft 46 includes a rotational center axis. The axial direction is the direction in which the rotational center axis C extends. The radial direction is a direction perpendicular to the rotational center axis C and moving away from the rotational center axis C

The output shaft 46 is rotatably supported by a reducer case 51 via bearings 53, 54. The output shaft 46 is connected to the axle 49 via the reducer 47. The axle 49 is rotatably supported by the reducer case 51 via bearings 55, 56.

The reducer 47 includes the reducer case 51 and a gear 52. The reducer case 51 accommodates the gear 52. The gear 52 transmits the rotation of the output shaft 46 to the axle 49. In FIG. 2, only the gear 52 in the multiple gears of the reducer 47 is shown and the other gears are omitted.

The transmission case 48 covers the primary pulley 41, the secondary pulley 42, the belt 43, the centrifugal clutch 45 and the output shaft 46 from the outside in the axial direction. The transmission case 48 is mounted to the reducer case 51 and the crankcase 21.

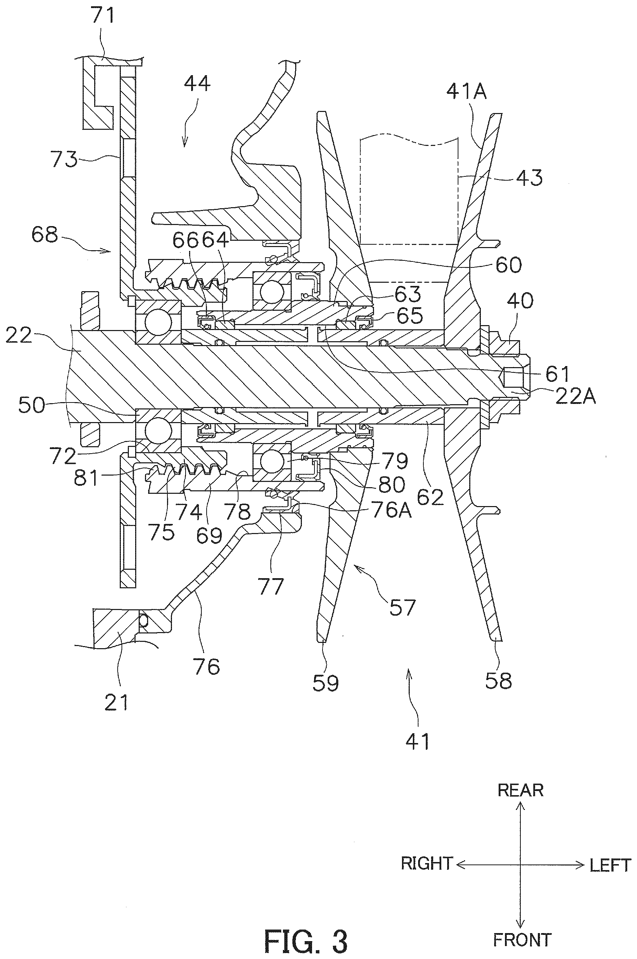

FIG. 3 is an enlarged view of a primary pulley 41 and the sheave drive mechanism 44. As shown in FIG. 3, the primary pulley 41 includes a first movable sheave 57 and a first fixed sheave 58. The first movable sheave 57 is supported by the crankshaft 22 so as to be movable in an axial direction of the crankshaft 22. The first movable sheave 57 is disposed axially inwardly (on a left side in FIG. 3) with respect to the first fixed sheave 58.

The first movable sheave 57 is supported by the crankshaft 22 so as to be non-rotatable in a circumferential direction of the crankshaft 22. The first movable sheave 57 is fixed to the crankshaft 22 so as to rotate integrally with the crankshaft 22.

The first movable sheave 57 includes a first sheave portion 59 and a first boss portion 60. The first sheave portion 59 is disposed on an opposite side of the first fixed sheave 58 in the axial direction of the crankshaft 22. The first groove 41A is provided between the first sheave portion 59 and the first fixed sheave 58.

The first boss portion 60 extends from the first sheave portion 59 in the axial direction of the crankshaft 22. The first boss portion 60 includes a first boss hole 61. The first boss hole 61 extends so as to pass through the first boss portion 60 in the axial direction of the crankshaft 22. The crankshaft 22 is inserted into the first boss hole 61.

The crankshaft 22 includes an outer shaft 62. The outer shaft 62 is mounted to an outer peripheral surface of the first shaft end 22A of the crankshaft 22. The above-mentioned first movable sheave 57 is fixed to the outer shaft 62 with a spline engagement. The outer shaft 62 is disposed in the first boss hole 61.

A first bush 63 and a second bush 64 are press-fitted into the first boss hole 61. The first bush 63 and the second bush 64 are disposed between the first boss hole 61 and an outer peripheral surface of the outer shaft 62. The first bush 63 and the second bush 64 are made of a sliding material.

As the first movable sheave 57 moves in the axial direction of the crankshaft 22, the first bush 63 and the second bush 64 slide in the axial direction with respect to the outer shaft 62. The first boss hole 61 is filled with lubricant such as grease. Oil seals 65, 66 seal between the first boss portion 60 and the outer shaft 62.

The first fixed sheave 58 is fixed to the crankshaft 22. The first fixed sheave 58 is fixed to the crankshaft 22 by a nut 40. The first fixed sheave 58 is fixed to the crankshaft 22 so as to be immovable in the axial direction. The first fixed sheave 58 is fixed to the crankshaft 22 so as to rotate integrally with the crankshaft 22.

The sheave drive mechanism 44 moves the first movable sheave 57 in the axial direction. As shown in FIG. 2, the sheave drive mechanism 44 includes an electric actuator 67, a first drive member 68, and a second drive member 69.

The electric actuator 67 is, for example, an electric motor. The electric actuator 67 may be an actuator other than the electric motor. The electric actuator 67 includes a rotating shaft 70. The rotating shaft 70 is connected to the first drive member 68 via a gear 71. Rotation of the rotating shaft 70 is transmitted to the first drive member 68 via the gear 71.

As shown in FIG. 3, the first drive member 68 includes a first hole 72. The first hole 72 extends so as to pass through the first drive member 68 in the axial direction of the crankshaft 22. The crankshaft 22 is inserted through the first hole 72. The first drive member 68 is rotatably supported by the crankshaft 22 via a bearing 50. The first drive member 68 is supported so as to be immovable with respect to the crankshaft 22 in the axial direction of the crankshaft 22.

The first drive member 68 includes a gear portion 73 and a feed screw portion 74. The gear portion 73 extends from the feed screw portion 74 in the radial direction of the crankshaft 22. The gear portion 73 meshes with the gear 71. The rotation of the rotating shaft 70 of the electric actuator 67 is transmitted to the gear portion 73 via a gear 71 and the first drive member 68 rotates. The feed screw portion 74 extends from the gear portion 73 in the axial direction of the crankshaft 22. A first screw 75 is provided on an outer peripheral surface of the feed screw portion 74.

A crankcase cover 76 is mounted to the crankcase 21. The crankcase cover 76 includes an opening 76A. The opening 76A opens on the primary pulley 41 side. The second drive member 69 is inserted through the opening 76A of the crankcase 21. An oil seal 77 seals between the second drive member 69 and the crankcase cover 76.

The second drive member 69 includes a second hole 78. The second hole 78 extends so as to penetrate the second drive member 69 in the axial direction of the crankshaft 22. The crankshaft 22 and the first boss portion 60 are inserted through the second hole 78.

The second drive member 69 is rotatably supported by the first boss portion 60. The second drive member 69 is supported by the first boss portion 60 via a bearing 79. The second drive member 69 is supported by the first boss portion 60 so as to be immovable in the axial direction. The second drive member 69 moves with the first movable sheave 57 in the axial direction. An oil seal 80 seals between the second drive member 69 and the first boss portion 60.

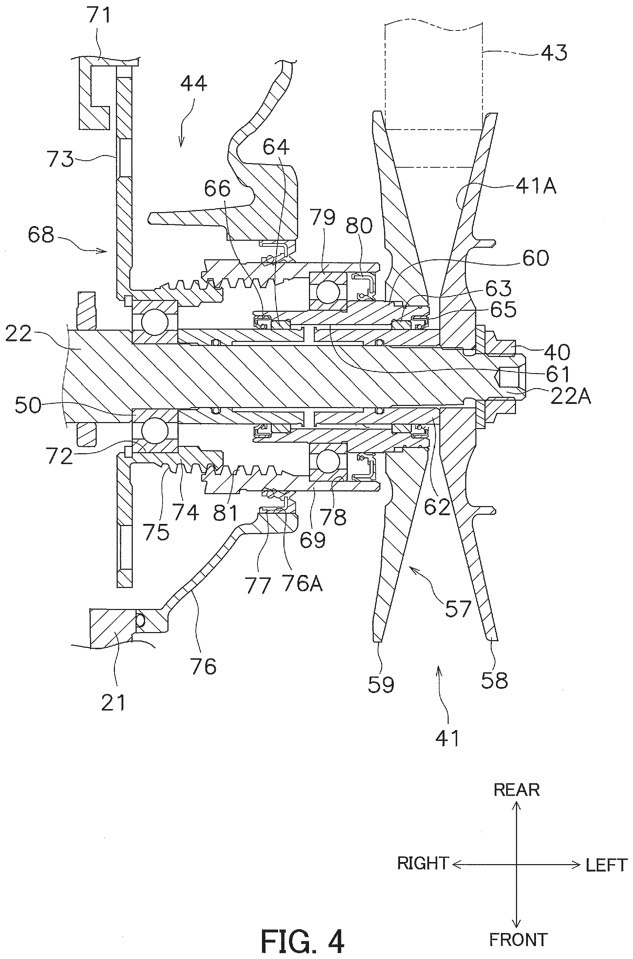

A second screw 81 is provided on an inner peripheral surface of the second drive member 69. The second screw 81 meshes with the first screw 75 of the first drive member 68. As the first drive member 68 rotates, the second drive member 69 moves in the axial direction as shown in FIG 4 and the first movable sheave 57 moves in the axial direction.

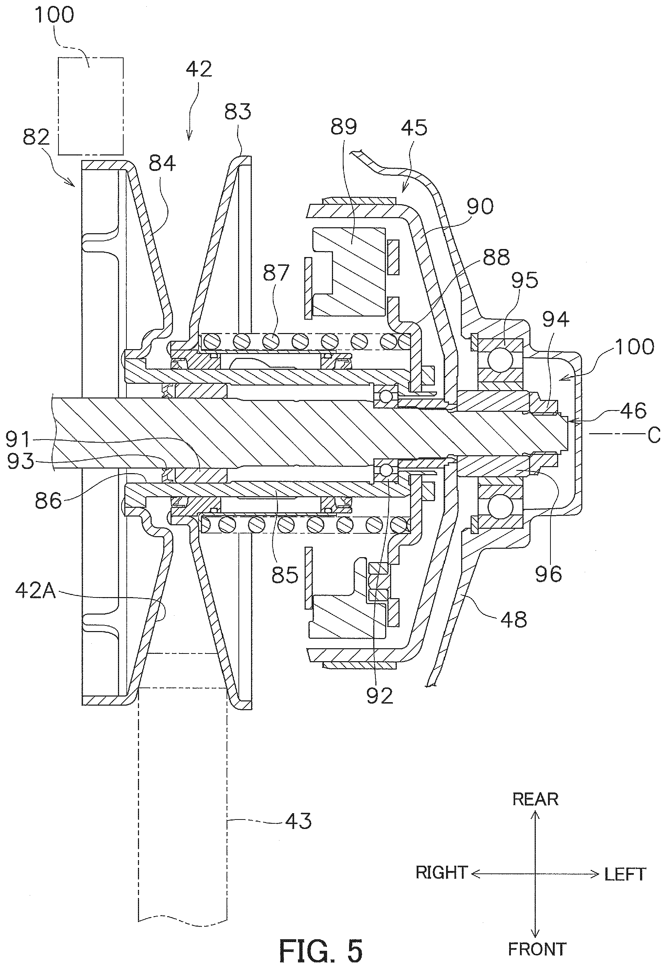

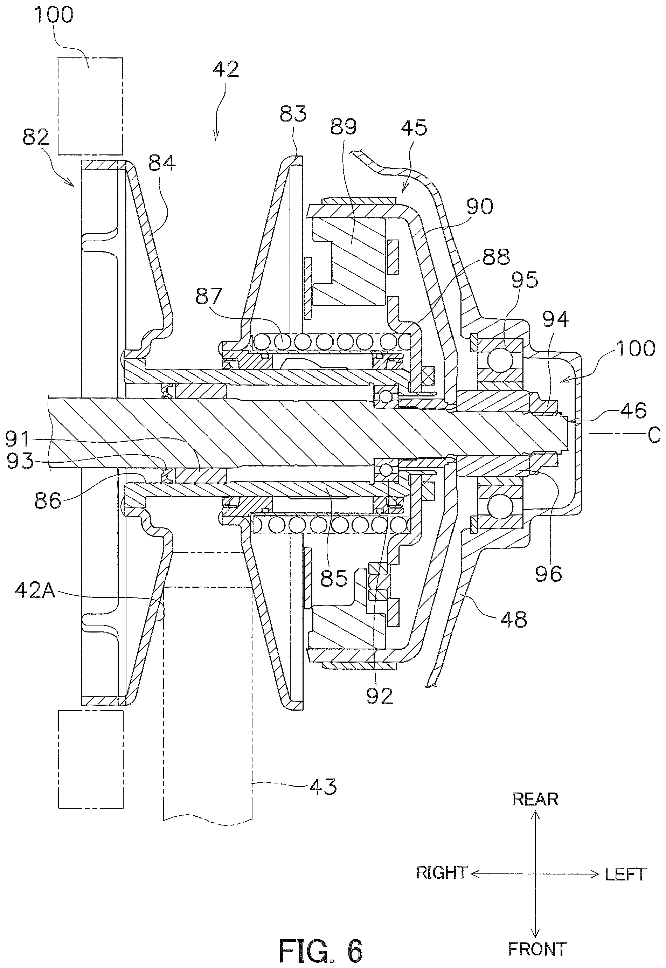

FIGS. 5 and 6 are an enlarged view of the secondary pulley 42 and the centrifugal clutch 45. As shown in FIGS. 5 and 6, the secondary pulley 42 includes a second fixed sheave 82 (an example of a fixed sheave) and a second movable sheave 83 (an example of a movable sheave). The second fixed sheave 82 is rotatably supported by the output shaft 46. The second fixed sheave 82 is supported on the output shaft 46 so as to be immovable in the axial direction.

The second fixed sheave 82 is disposed so as to face the second movable sheave 83 in an axial direction of the output shaft 46. The second fixed sheave 82 includes a second sheave portion 84 and a second boss portion 85. The second groove 42A is provided between the second sheave portion 84 and the second movable sheave 83.

The second boss portion 85 extends from the second sheave portion 84 in the axial direction of the output shaft 46. The second boss portion 85 includes a second boss hole 86. The second boss hole 86 extends so as to penetrate the second boss portion 85 in the axial direction of the output shaft 46. The output shaft 46 is inserted into the second boss hole 86.

As shown in FIGS. 5 and 6, the output shaft 46 is rotatably supported by the transmission case 48 via a bearing 95. Specifically, the output shaft 46 is rotatably supported by the transmission case 48 via the bearing 95 and a collar member 96. A bush 91 is press-fitted into the second boss hole 86. The bush 91 is made of a sliding material. The bush 91 is disposed between the second boss hole 86 and an outer peripheral surface of the output shaft 46.

A bearing 92 is disposed in the second boss hole 86. The bearing 92 is disposed on the outer peripheral surface of a tip portion of the output shaft 46. Specifically, the bearing 92 is disposed on the outer peripheral surface on a base end side of the tip portion of the output shaft 46.

The second boss portion 85 is rotatably supported by the bush 91 and the bearing 92 with respect to the output shaft 46. The bush 91 and the bearing 92 support the second fixed sheave 82. The bush 91 and the bearing 92 support the second movable sheave 83 via the second boss portion 85. The second boss hole 86 is filled with lubricant such as grease. An oil seal 93 seals between the second boss portion 85 and the output shaft 46.

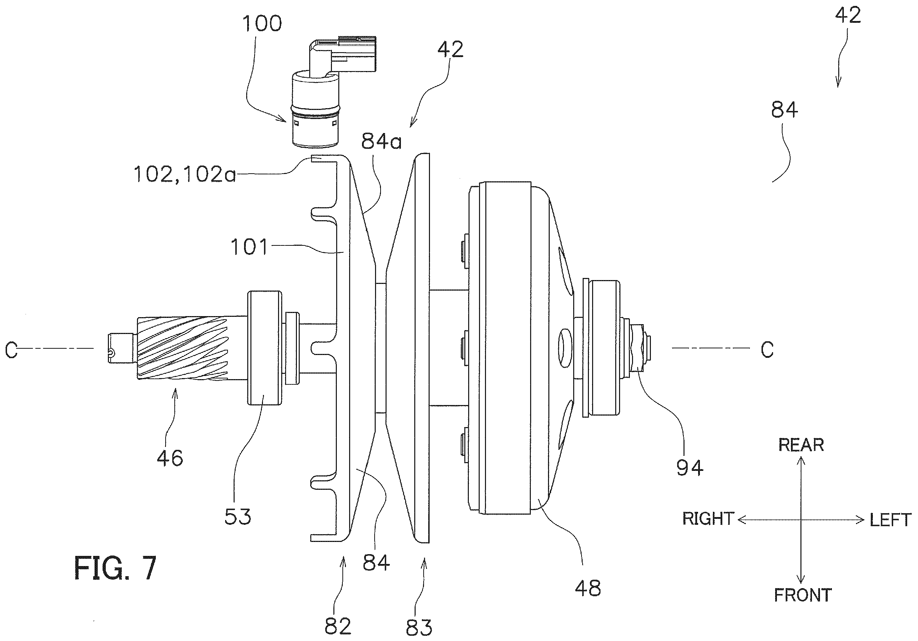

As shown in FIGS. 7, 8 and 9, the second fixed sheave 82 includes the above-mentioned second sheave portion 84, a flange portion 101 and a detected portion 102. The second sheave portion 84 is formed in a circular shape. The flange portion 101 is integrally formed with the second sheave portion 84. The flange portion 101 protrudes from an outer surface of the second sheave portion 84. Specifically, the flange portion 101 is integrally formed with an outer peripheral portion of the second sheave portion 84. The flange portion 101 is formed in an annular shape and extends in the circumferential direction.

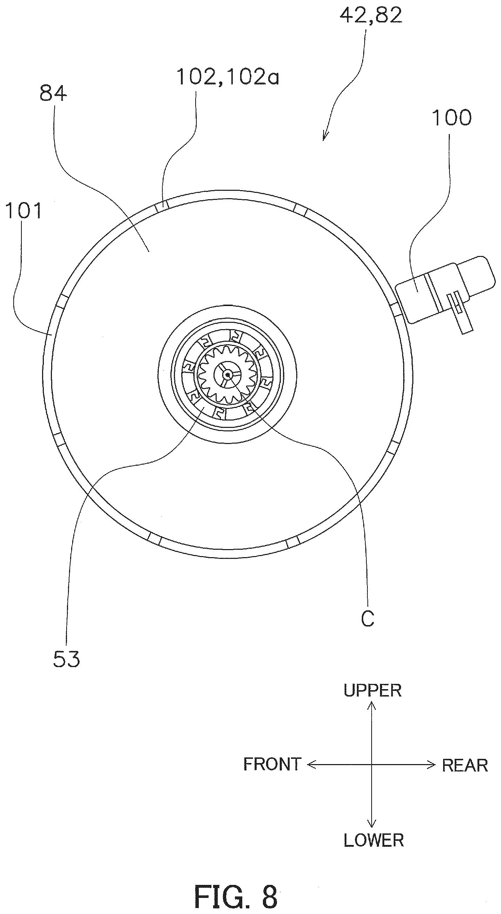

As shown in FIGS. 7 and 8, the detected portion 102 is a portion which is detected by the rotation detection sensor 100. As shown in FIGS. 7, 8 and 9, the detected portion 102 is integrally formed with the second sheave portion 84. The detected portion 102 includes at least one protruding portion 102a. In this embodiment, the at least one protruding portion 102a includes a plurality of protruding portions 102a.

The plurality of protruding portions 102a is configured to protrude from an outer surface 84a of the second sheave portion 84. Specifically, the plurality of protruding portions 102a is integrally formed on the outer peripheral portion of the second sheave portion 84. The plurality of protruding portions 102a is integrally formed on the outer peripheral portion of the second sheave portion 84 so as to protrude from the outer peripheral portion of the second sheave portion 84. In this embodiment, each of the plurality of protruding portions 102a protrudes from the flange portion 101 in the axial direction. The plurality of protruding portions 102a is disposed at intervals from each other in the circumferential direction.

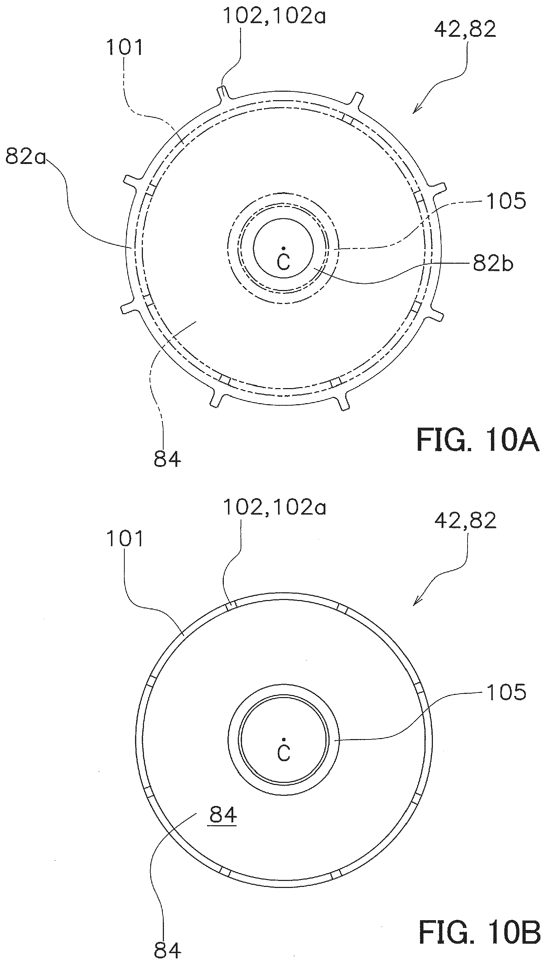

Here, the plurality of protruding portions 102a and the flange portion 101 are formed as shown in FIGS. 10A and 10B. As shown in FIG. 10A, an outer circumferential portion 82a of the second fixed sheave 82 corresponding to the flange portion 101 and the plurality of protruding portions 102a are bent by press molding, in a planar state in which the plurality of protruding portions 102a protrudes radially outwardly from the outer circumferential portion 82a of the second fixed sheave 82. Therefore, as shown in FIG. 10B, the plurality of protruding portions 102a and the flange portion 101 are formed to protrude in the axial direction from the outer surface 84a of the second sheave portion 84.

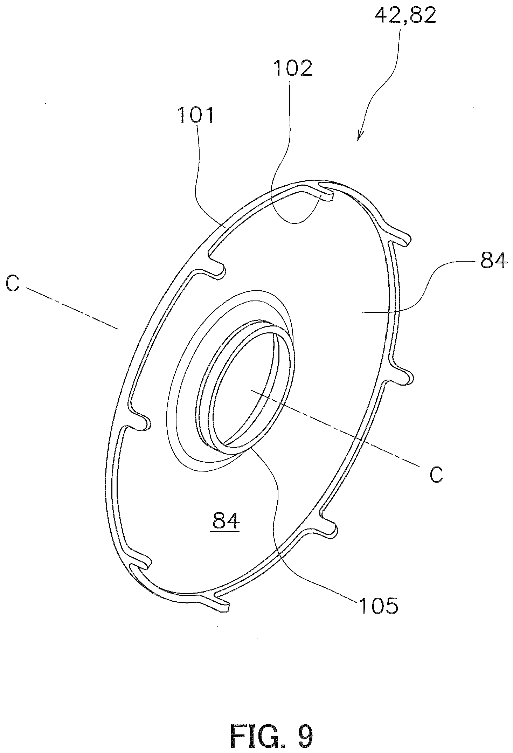

As shown in FIG. 10A, the planar second sheave portion 84 and the annular inner peripheral portion 82b of the second fixed sheave 82 are extruded by press molding. Therefore, as shown in FIGS 9 and 10B, the second sheave portion 84 is formed in a truncated cone shape so as to be inclined in the radial direction, and the boss portion 105 is formed so as to protrude from the outer surface 84a of the second sheave portion 84 in the axial direction.

The rotation detection sensor 100, which is shown in FIGS. 2, 5, 6, 7 and 8, detects rotation of the secondary pulley 42. The rotation detection sensor 100 includes a Hall type rotation sensor. As shown in FIG. 2, the rotation detection sensor 100 is mounted to the reducer case 51. Specifically, the rotation detection sensor 100 is mounted to the reducer case 51 so as to face the detected portion 102. More specifically, the rotation detection sensor 100 is mounted to the reducer case 51 radially outwardly than rotation trajectory of the detected portion 102.

As shown in FIGS. 2, 5, 6, 7 and 8, the rotation detection sensor 100 is disposed rearward of the secondary pulley 42 in a top view of a state where the straddled vehicle 1 is viewed from above (in a side view of a state where the straddled vehicle 1 is viewed from a side thereof). Specifically, the rotation detection sensor 100 is disposed rearward of the second fixed sheave 82, for example, the second sheave portion 84 in the top view of a state where the straddled vehicle 1 is viewed from above (in the side view of a state where the straddled vehicle 1 is viewed from the side thereof).

As shown in FIGS. 5, 6, 7, and 8, the rotation detection sensor 100 is disposed radially outwardly than the secondary pulley 42. Specifically, the rotation detection sensor 100 is disposed radially outwardly than the second fixed sheave 82, for example, the second sheave portion 84. As shown in FIG. 8, the rotation detection sensor 100 is disposed above the rotational center axis C in the side view of the straddled vehicle 1.

In this state, when the second fixed sheave 82 rotates, each of the plurality of protruding portions 102a passes through a radially inner side of the rotation detection sensor 100. At this time, the rotation detection sensor 100 detects the number of rotations of the secondary pulley 42 based on the time interval at which each of the plurality of protruding portions 102a is detected.

As shown in FIGS. 5 and 6, the second movable sheave 83 is disposed so as to face the second fixed sheave 82 in the axial direction. The second movable sheave 83 is disposed axially outwardly (on a right side in FIGS. 5 and 6) with respect to the second fixed sheave 82.

The second movable sheave 83 is configured to rotate around a rotational center axis C. Specifically, the second movable sheave 83 is supported non-rotatably with respect to the second boss portion 85. The second movable sheave 83 rotates integrally with the second sheave portion 84 via the second boss portion 85. In other words, the second movable sheave 83 rotates integrally with the second fixed sheave 82.

The second movable sheave 83 is configured to move with respect to the second fixed sheave 82 in the axial direction. Specifically, the second movable sheave 83 is configured to move with respect to the second sheave portion 84 in the axial direction. More specifically, the second movable sheave 83 is supported by the second boss portion 85 so as to be movable in the axial direction.

In this embodiment, the second movable sheave 83 is fixed to the second boss portion 85 with a spline engagement. A spring 87 is disposed between the second movable sheave 83 and the centrifugal clutch 45. The spring 87 urges the second movable sheave 83 toward the second fixed sheave 82.

As shown in FIG. 5, in case that the vehicle speed is lower than a predetermined connecting speed, the centrifugal clutch 45 is in a disengaged state where the continuously variable transmission 15 is disconnected from the rear wheel 5. As shown in FIG. 6, the centrifugal clutch 45 is in an engaged state where the continuously variable transmission 15 is connected to the rear wheel 5 in case that the vehicle speed is equal to or higher than the connecting speed.

As shown in FIGS. 5 and 6, the centrifugal clutch 45 includes a drive plate 88, clutch shoes 89 and a clutch outer 90. The drive plate 88 is fixed to the second boss portion 85. The drive plate 88 rotates integrally with the second boss portion 85.

The clutch shoes 89 are connected to the drive plate 88. The clutch shoes 89 rotate integrally with the drive plate 88. The clutch shoes 89 are supported so as to be movable in a radial direction with respect to the drive plate 88. The clutch shoes 89 are urged radially inwardly by a clutch spring (not shown).

The clutch outer 90 covers the clutch shoes 89 in the radial direction. The clutch outer 90 is mounted to the output shaft 46 so as to rotate integrally with the output shaft 46. The clutch outer 90 is positioned on the output shaft 46 by a nut 94.

In case that the vehicle speed is slower than the predetermined connecting speed, the clutch shoes 89 move radially inwardly due to an urging force of the clutch spring and separates from the clutch outer 90. In this state, the centrifugal clutch 45 is in the disengaged state and the rotation of the secondary pulley 42 is not transmitted to the output shaft 46.

In case that the vehicle speed is equal to or greater than the coupling speed, the clutch shoes 89 move radially outwardly due to centrifugal force against the urging force of the clutch spring. As a result, the clutch shoes 89 contact with the clutch outer 90. In this state, the centrifugal clutch 45 is in the engaged state and the rotation of the secondary pulley 42 is transmitted to the output shaft 46 via the drive plate 88, the clutch shoes 89, and the clutch outer 90.

In the straddled vehicle 1 including the above-described configuration, in the continuously variable transmission 15, the secondary pulley 42 includes the second fixed sheave 82 and the second movable sheave 83. The second fixed sheave 82 includes the second sheave portion 84 and the detected portion 102. The detected portion 102 is integrally formed with the second sheave portion 84.

Therefore, in the continuously variable transmission 15, there is no need to prepare the detected portion 102 as a separate member such as the conventional technology. In other words, in the continuously variable transmission 15, the detected portion 102 can be configured with a simple structure and an assemblability of the detected portion 102 and the second sheave portion 84 can be improved. In addition, weight of the second sheave portion 84 can be reduced.

Although one embodiment of the present invention has been described above, the present invention is not limited to the above embodiment and various modifications are possible without departing from the gist of the invention.

The straddled vehicle 1 is not limited to the scooter, and alternatively, may be a vehicle of another type such as a street type, an off-road type, or a moped type. The configuration of the continuously variable transmission 15 is not limited to that in the preferred embodiment described above and may be changed. The process for controlling the gear ratio of the continuously variable transmission 15 is not limited to that in the preferred embodiment described above and may be changed.

In the above embodiment, an example is shown in which the detected portion 102 is provided on the second fixed sheave 82. The detected portion 102 can be provided on the second movable sheave 83.

In the above embodiment, an example is shown in which the rotation detection sensor 100 detects the rotation of the secondary pulley 42. The rotation detection sensor 100 may detect rotation of the primary pulley 41. In this case, the detected portion 102 is provided on the primary pulley 41 (the first movable sheave 57 or the first fixed sheave 58). The rotation detection sensor 100 is disposed radially outwardly than the primary pulley 41.

In the above embodiment, an example is shown in which the flange portion 101 is provided between the outer peripheral portion of the second sheave portion 84 and the detected portion 102 (the plurality of protruding portions 102a). Alternatively, the detected portion 102 (the plurality of protruding portions 102a) can be provided on the outer peripheral portion of the second sheave portion 84 without providing the flange portion 101.

According to the present invention, in a continuously variable transmission and a straddled vehicle including a continuously variable transmission, a detected portion can be configured with a simple structure, an assemblability of the detected portion and a sheave can be improved, and weight of the sheave can be reduced.

### Reference Signs List

5: a rear wheel, 14: an engine, 15: a continuously variable transmission, 22: a crankshaft, 41: a primary pulley, 42: a secondary pulley, 43: a belt, C: a rotational center axis, 82: a second fixed sheave, 83: a second movable sheave, 84: a second sheave portion, 100: a rotation detection sensor, 101: a flange portion, 102: a detected portion, 102a: a protruding portion

## Claims

1. A continuously variable transmission (15) transmitting driving force from an engine (14) to a wheel (5) comprising:
a primary pulley (41) connected to the engine (14);
a secondary pulley (42) connected to the wheel (5);
a belt (43) wound around the primary pulley (41) and the secondary pulley (42); and
a detection portion (100) configured to detect rotation of at least one of the primary pulley (41) and the secondary pulley (42);
each of the primary pulley (41) and the secondary pulley (42) includes a fixed sheave (82) configured to rotate around a rotational center axis (C), and a movable sheave (83) disposed so as to face the fixed sheave (82) in an axial direction with respect to the rotational center axis (C) and to move relative to the fixed sheave in the axial direction; and
at least one of the fixed sheave (82) and the movable sheave (83) includes a sheave body (84), and a detected portion (102) which is integrally formed with the sheave body (84) and which is detected by the detection portion (100);
**characterized in that**
the at least one of the fixed sheave (82) and the movable sheave (83) further includes a flange portion (101) which is integrally formed with the sheave body (84) and protrudes from an outer surface of the sheave body (84), and
the detected portion (102) includes at least one protruding portion (102a) which is protrudes from the flange portion (101);
wherein
the flange portion (101) and the detected portion (102) are formed so as to protrude from an outer peripheral portion of the sheave body (84) by bending the at least one protruding portion (102a) in a state where the at least one protruding portion (102a) protrudes from the outer peripheral portion of the sheave body (84) to a radially outer side of the sheave body.

2. The continuously variable transmission according to claim 1, wherein
the detected portion (102) includes at least one protruding portion (102a) which protrudes from an outer surface (84a) of the sheave body (84).

3. The continuously variable transmission according to claim 2, wherein
the sheave body (84) is formed in a circular shape, and
the at least one protruding portion (102a) is integrally formed with an outer peripheral portion of the sheave body (84).

4. The continuously variable transmission according to claim 3, wherein
the at least one protruding portion (102a) is formed so as to protrude from an outer surface of the sheave body (84) by bending the at least one protruding portion (102a) in a state where the at least one protruding portion (102a) protrudes from the outer peripheral portion of the sheave body (84) to a radially outer side of the sheave body (84).

5. The continuously variable transmission according to any one of the foregoing claims, wherein
the sheave body (84) is formed in a circular shape, and
the flange portion (101) is integrally formed with the outer peripheral portion of the sheave body (84) and extends in a circumferential direction with respect to the rotational center axis (C).

6. The continuously variable transmission according to claim 1, wherein
the detection portion (100) is disposed outside the sheave body (84) in a radial direction with respect to the rotation center axis (C).

7. A straddled vehicle (1) comprising:
an engine (14) including a crankshaft;
a wheel (5); and
a continuously variable transmission (15) transmitting driving force from the engine to the wheel;
the continuously variable transmission (15) includes a primary pulley (41) connected to the engine, a secondary pulley (42) connected to the wheel (5), a belt wound (43) around the primary pulley (41) and the secondary pulley (42), and a detection portion (100) configured to detect rotation of at least one of the primary pulley (41) and the secondary pulley (42);
each of the primary pulley (41) and the secondary pulley (42) includes a fixed sheave (82) configured to rotate around a rotational center axis (C), and a movable sheave (83) disposed so as to face the fixed sheave (82) in an axial direction with respect to the rotational center axis (C) and to move relative to the fixed sheave (82) in the axial direction; and
at least one of the fixed sheave (82) and the movable sheave (83) includes a sheave body (84), and a detected portion (102) which is integrally formed with the sheave body (84) and which is detected by the detection portion (100);
**characterized in that** at least one of the fixed sheave (82) and the movable sheave (83) further includes a flange portion (101) which is integrally formed with the sheave body (84) and protrudes from an outer surface of the sheave body (84), and
the detected portion (102) includes at least one protruding portion (102a) which is protrudes from the flange portion (101);
wherein
the flange portion (101) and the detected portion (102) are formed so as to protrude from an outer peripheral portion of the sheave body (84) by bending the at least one protruding portion (102a) in a state where the at least one protruding portion (102a) protrudes from the outer peripheral portion of the sheave body (84) to a radially outer side of the sheave body.

## Patentansprüche

1. Stufenloses Getriebe (15), das Antriebskraft von einem Motor (14) auf ein Rad (5) überträgt, umfassend:
eine primäre Riemenscheibe (41), die mit dem Motor (14) verbunden ist;
eine sekundäre Riemenscheibe (42), die mit dem Rad (5) verbunden ist;
einen Riemen (43), der um die primäre Riemenscheibe (41) und die sekundäre Riemenscheibe (42) herum gewickelt ist; sowie
einen Erfassungsabschnitt (100), der so ausgeführt ist, dass er Drehung der primären Riemenscheibe (51) oder/und der sekundären Riemenscheibe (42) erfasst;
wobei die primäre Riemenscheibe (41) und die sekundäre Riemenscheibe (42) jeweils eine stationäre Scheibe (82), die zum Drehen um eine Drehungs-Mittelachse (C) herum ausgeführt ist, sowie eine bewegliche Scheibe (83) einschließt, die so angeordnet ist, dass sie der stationären Scheibe (82) in einer axialen Richtung in Bezug auf die Drehungs-Mittelachse (C) zugewandt ist und sich relativ zu der stationären Scheibe in der axialen Richtung bewegt; und
die stationäre Scheibe (82) oder/und die bewegliche Scheibe (83) einen Scheibenkörper (84) sowie einen erfassten Abschnitt (102) einschließt/einschließen, der integral mit dem Scheibenkörper (84) ausgebildet ist und der durch den Erfassungsabschnitt (100) erfasst wird;
**dadurch gekennzeichnet, dass**
die stationäre Scheibe (82) oder/und die bewegliche Scheibe (83) des Weiteren einen Flanschabschnitt (101) einschließt/einschließen, der integral mit dem Scheibenkörper (84) ausgebildet ist und von einer Außenfläche des Scheibenkörpers (84) vorsteht, und
der erfasste Abschnitt (102) wenigstens einen vorstehenden Abschnitt (102a) einschließt, der von dem Flanschabschnitt (101) vorsteht; wobei
der Flanschabschnitt (101) und der erfasste Abschnitt (102) so ausgebildet sind, dass sie von einem Außenumfangsabschnitt des Scheibenkörpers (84) vorstehen, wenn der wenigstens eine vorstehende Abschnitt (102a) in einem Zustand gebogen wird, indem der wenigstens eine vorstehende Abschnitt (102a) von dem Außenumfangsabschnitt des Scheibenkörpers (84) zu einer radial außen liegenden Seite des Scheibenkörpers vorsteht.

2. Stufenloses Getriebe nach Anspruch 1, wobei
der erfasste Abschnitt (102) wenigstens einen vorstehenden Abschnitt (102a) einschließt, der von einer Außenfläche (84a) des Scheibenkörpers (84) vorsteht.

3. Stufenloses Getriebe nach Anspruch 2, wobei
der Scheibenkörper (84) in einer Kreisform ausgebildet ist, und
der wenigstens eine vorstehende Abschnitt (102a) integral mit einem Außenumfangsabschnitt des Scheibenkörpers (84) ausgebildet ist.

4. Stufenloses Getriebe nach Anspruch 3, wobei
der wenigstens eine vorstehende Abschnitt (102a) so ausgebildet ist, dass er von einer Außenfläche des Scheibenkörpers (84) vorsteht, wenn der wenigstens eine vorstehende Abschnitt (102a) in einem Zustand gebogen wird, indem der wenigstens eine vorstehende Abschnitt (102a) von dem Außenumfangsabschnitt des Scheibenkörpers (84) zu einer radial außen liegenden Seite des Scheibenkörpers (84) vorsteht.

5. Stufenloses Getriebe nach einem der vorangehenden Ansprüche, wobei
der Scheibenkörper (84) in einer Kreisform ausgebildet ist, und
der Flanschabschnitt (101) integral mit dem Außenumfangsabschnitt des Scheibenkörpers (84) ausgebildet ist und sich in einer Umfangsrichtung in Bezug auf die Drehungs-Mittelachse (C) erstreckt.

6. Stufenloses Getriebe nach Anspruch 1, wobei
der Erfassungsabschnitt (100) außerhalb des Scheibenkörpers (84) in einer radialen Richtung in Bezug auf die Drehungs-Mittelachse (C) angeordnet ist.

7. Spreizsitz-Fahrzeug (1) das umfasst:
einen Motor (5), der eine Kurbelwelle einschließt;
ein Rad (5); sowie
ein stufenloses Getriebe (15), das Antriebskraft von dem Motor auf das Rad überträgt;
wobei das stufenlose Getriebe (15) eine primäre Riemenscheibe (41), die mit dem Motor verbunden ist, eine sekundäre Riemenscheibe (42), die mit dem Rad (5) verbunden ist, einen Riemen (43), der um die primäre Riemenscheibe (41) und die sekundäre Riemenscheibe (42) herum gewickelt ist, sowie einen Erfassungsabschnitt (100) einschließt, der so ausgeführt ist, dass er Drehung der primären Riemenscheibe (51) oder/und der sekundären Riemenscheibe (42) erfasst;
wobei die primäre Riemenscheibe (41) und die sekundäre Riemenscheibe (42) jeweils eine stationäre Scheibe (82), die zum Drehen um eine Drehungs-Mittelachse (C) herum ausgeführt ist, sowie eine bewegliche Scheibe (83) einschließt, die so angeordnet ist, dass sie der stationären Scheibe (82) in einer axialen Richtung in Bezug auf die Drehungs-Mittelachse (C) zugewandt ist und sich relativ zu der stationären Scheibe (82) in der axialen Richtung bewegt; und
die stationäre Scheibe (82) oder/und die bewegliche Scheibe (83) einen Scheibenkörper (84) sowie einen erfassten Abschnitt (102) einschließt/einschließen, der integral mit dem Scheibenkörper (84) ausgebildet ist und der durch den Erfassungsabschnitt (100) erfasst wird;
**dadurch gekennzeichnet, dass** die stationäre Scheibe (82) oder/und die bewegliche Scheibe einen Flanschabschnitt (101) einschließt/einschließen, der integral mit dem Scheibenkörper (84) ausgebildet ist und von einer Außenfläche des Scheibenkörpers (84) vorsteht, und
der erfasste Abschnitt (102) wenigstens einen vorstehenden Abschnitt (102a) einschließt, der von dem Flanschabschnitt (101) vorsteht;
wobei
der Flanschabschnitt (101) und der erfasste Abschnitt (102) so ausgebildet sind, dass sie von einem Außenumfangsabschnitt des Scheibenkörpers (84) vorstehen, wenn der wenigstens eine vorstehende Abschnitt (102a) in einem Zustand gebogen wird, indem der wenigstens eine vorstehende Abschnitt (102a) von dem Außenumfangsabschnitt des Scheibenkörpers (84) zu einer radial außen liegenden Seite des Scheibenkörpers vorsteht.

## Revendications

1. Transmission variable en continu (15) transmettant la force motrice d'un moteur (14) à une roue (5), comprenant :
une poulie primaire (41) connectée au moteur (14) ;
une poulie secondaire (42) connectée à la roue (5) ;
une courroie (43) enroulée autour de la poulie primaire (41) et de la poulie secondaire (42) ; et
une portion de détection (100) configurée pour détecter la rotation d'au moins une poulie parmi la poulie primaire (41) et la poulie secondaire (42) ;
chaque poulie parmi la poulie primaire (41) et la poulie secondaire (42) incluant un réa fixe (82) configuré pour tourner autour d'un axe du centre de rotation (C), et un réa mobile (83) disposé de manière à faire face au réa fixe (82) dans une direction axiale par rapport à l'axe du centre de rotation (C) et à se déplacer par rapport au réa fixe dans la direction axiale ; et
au moins un réa parmi le réa fixe (82) et le réa mobile (83) incluant un corps de réa (84), et une portion détectée (102) qui est formée de manière intégrée avec le corps de réa (84) et qui est détectée par la portion de détection (100) ;
**caractérisée en ce que**
ledit au moins un réa parmi le réa fixe (82) et le réa mobile (83) inclut en outre une portion de bride (101) qui est formée de manière intégrée avec le corps de réa (84) et qui fait saillie d'une surface externe du corps de réa (84), et
la portion détectée (102) inclut au moins une portion saillante (102a) qui fait saillie de la portion de bride (101) ;
dans laquelle la portion de bride (101) et la portion détectée (102) sont formées de manière à faire saillie d'une portion périphérique externe du corps de réa (84) en pliant ladite au moins une portion saillante (102a) dans un état où ladite au moins une portion saillante (102a) fait saillie de la portion périphérique externe du corps de réa (84) vers un côté radialement externe du corps de réa.

2. Transmission variable en continu selon la revendication 1, dans laquelle
la portion détectée (102) inclut au moins une portion saillante (102a) qui fait saillie d'une surface externe (84a) du corps de réa (84).

3. Transmission variable en continu selon la revendication 2, dans laquelle
le corps de réa (84) est de forme circulaire, et
ladite au moins une portion saillante (102a) est formée de manière intégrée avec une portion périphérique externe du corps de réa (84).

4. Transmission variable en continu selon la revendication 3, dans laquelle
ladite au moins une portion saillante (102a) est formée de manière à faire saillie d'une surface externe du corps de réa (84) en pliant ladite au moins une portion saillante (102a) dans un état où ladite au moins une portion saillante (102a) fait saillie de la portion périphérique externe du corps de réa (84) vers un côté radialement externe du corps de réa (84).

5. Transmission variable en continu selon l'une quelconque des revendications précédentes, dans laquelle
le corps de réa (84) est de forme circulaire, et
la portion de bride (101) est formée de manière intégrée avec la portion périphérique externe du corps de réa (84) et s'étend en direction circonférentielle par rapport à l'axe du centre de rotation (C).

6. Transmission variable en continu selon la revendication 1, dans laquelle
la portion de détection (100) est disposée à l'extérieur du corps de réa (84) en direction radiale par rapport à l'axe du centre de rotation (C).

7. Véhicule à enfourcher (1) comprenant :
un moteur (14) incluant un vilebrequin ;
une roue (5) ; et
une transmission variable en continu (15) transmettant la force motrice du moteur à la roue ;
la transmission variable en continu (15) incluant une poulie primaire (41) connectée au moteur, une poulie secondaire (42) connectée à la roue (5), une courroie (43) enroulée autour de la poulie primaire (41) et de la poulie secondaire (42), et une portion de détection (100) configurée pour détecter la rotation d'au moins une poulie parmi la poulie primaire (41) et la poulie secondaire (42) ;
chaque poulie parmi la poulie primaire (41) et la poulie secondaire (42) incluant un réa fixe (82) configuré pour tourner autour d'un axe du centre de rotation (C), et un réa mobile (83) disposé de manière à faire face au réa fixe (82) dans une direction axiale par rapport à l'axe du centre de rotation (C) et à se déplacer par rapport au réa fixe (82) dans la direction axiale ; et
au moins un réa parmi le réa fixe (82) et le réa mobile (83) incluant un corps de réa (84) et une portion détectée (102) qui est formée de manière intégrée avec le corps de réa (84) et qui est détectée par la portion de détection (100) ;
**caractérisé en ce qu'**au moins un réa parmi le réa fixe (82) et le réa mobile (83) inclut en outre une portion de bride (101) qui est formée de manière intégrée avec le corps de réa (84) et qui fait saillie d'une surface externe du corps de réa (84), et
la portion détectée (102) inclut au moins une portion saillante (102a) qui fait saillie de la portion de bride (101) ;
dans lequel la portion de bride (101) et la portion détectée (102) sont formées de manière à faire saillie d'une portion périphérique externe du corps de réa (84) en pliant ladite au moins une portion saillante (102a) dans un état où ladite au moins une portion saillante (102a) fait saillie de la portion périphérique externe du corps de réa (84) vers un côté radialement externe du corps de réa.
